# EUROPEAN PATENT APPLICATION

(11) **EP 4 362 192 A1**
(43) Date of publication of application: **01.05.2024**
(21) Application number: 22918464.3
(22) Date of filing: 28.12.2022
(51) Int. Cl.: H01M 50/271, H01M 50/244, H01M 50/256

(54) **TOP COVER, BATTERY AND ELECTRIC DEVICE**

(30) Priority: 06.01.2022 CN 202220022403 U
(71) Applicant: Contemporary Amperex Technology Co., Limited, Ningde, Fujian 352100 (CN)
(72) Inventor: HUANG, Zhijie, Ningde, Fujian 352100 (CN); PAN, Xin, Ningde, Fujian 352100 (CN); CHEN, Zhiming, Ningde, Fujian 352100 (CN); MIAO, Huimin, Ningde, Fujian 352100 (CN); YU, Xiaoyin, Ningde, Fujian 352100 (CN)
(74) Representative: Ran, Handong
(86) International application number: PCT/CN2022/142754
(87) International publication number: WO 2023/131023

(57) **Abstract**

Atop cover, a battery and an electric device. The top cover (10) comprises a cover body (110), a first connection seat (120) and a second connection seat (130). The cover body (110) comprises a first cover plate (111), a first side plate (112) and a second side plate (113), wherein the first side plate (112) and the second side plate (113) are connected to either side of the first cover plate (111) in a manner of facing each other; the first side plate (112) and the second side plate (113) are respectively provided with a first through hole (1121) and a second through hole (1131), which are opposite each other; the first connection seat (120) is connected to the surface of the first side plate (112) facing the second side plate (113); the first connection seat (120) is provided with a first groove (121) communicating with the first through hole (1121); the second connection seat (130) is connected to the surface of the second side plate (113) facing the first side plate (112); and the second connection seat (130) is provided with a second groove (131) communicating with the second through hole (1131).

## Description

### CROSS-REFERENCE TO RELATED APPLICATIONS

This application claims priority to Chinese Patent Application No. 202220022403.6, filed with the China National Intellectual Property Administration on January 6, 2022 and entitled "TOP COVER, BATTERY, AND ELECTRICAL DEVICE", which is incorporated herein by reference in its entirety.

### TECHNICAL FIELD

This application relates to the field of batteries, and in particular, to a top cover, a battery, and an electrical device.

### BACKGROUND

Energy conservation and emission reduction are key to sustainable development of the transportation industry. Electric vehicles have become an important integral part of the sustainable development of the transportation industry by virtue of energy saving and environmental friendliness. Battery technology is crucial to development of electric vehicles.

A top cover of a battery is prone to damage due to repeated lifting of a carrying handle of the battery.

### SUMMARY

### TECHNICAL PROBLEMS

In view of the above problem, this application provides a top cover, a battery, and an electrical device to alleviate the problem that the top cover is prone to damage.

### TECHNICAL SOLUTIONS

According to a first aspect, this application provides a top cover. The top cover includes a cover body, a first connecting seat, and a second connecting seat. The cover body includes a first cover plate, a first side plate, and a second side plate. The first side plate and the second side plate are opposite to each other and connected to one side of the first cover plate. A first through-hole and a second through-hole opposite to each other are created on the first side plate and the second side plate respectively. The first connecting seat is connected to a surface of the first side plate, the surface being oriented toward the second side plate. A first groove communicating with the first through-hole is created on the first connecting seat. The second connecting seat is connected to a surface of the second side plate, the surface being oriented toward the first side plate. A second groove communicating with the second through-hole is created on the second connecting seat.

In the technical solution of an embodiment of this application, two ends of a carrying handle are located in the first groove and the second groove respectively. At the time of lifting and pulling the carrying handle, the carrying handle acts directly on the first connecting seat and the second connecting seat, thereby reducing the probability of cracking the cover body of the top cover.

In some embodiments, the top cover further includes: a first connecting rod, a second connecting rod, and a carrying handle. A part of the first connecting rod passes through the first through-hole and is fixed in the first groove. A part of the second connecting rod passes through the second through-hole and is fixed in the second groove. Two ends of the carrying handle are fitted to the first connecting rod outside the first through-hole and the second connecting rod outside the second through-hole respectively. The two ends of the carrying handle are rotatable relative to the first connecting rod and the second connecting rod respectively. The two ends of the carrying handle are fitted to the first connecting rod and the second connecting rod respectively, and the first connecting rod and the second connecting rod are disposed penetratingly in the first side plate and the second side plate of the cover body respectively. Therefore, when being lifted or pulled, the carrying handle exerts a force away from the first cover plate onto the first connecting seat and the second connecting seat respectively, thereby further reducing the probability of cracking the cover body of the top cover.

In some embodiments, a first thread and a second thread matching each other are disposed on the first connecting rod and in the first groove respectively; and/or a third thread and a fourth thread matching each other are disposed on the second connecting rod and in the second groove respectively. The first thread of the first connecting rod and the second thread of the first groove enable a reliable fixed connection between the first connecting rod and the first groove, and the first connecting rod is detachable from the first groove. The third thread of the second connecting rod and the fourth thread of the second groove enable a reliable fixed connection between the second connecting rod and the second groove, and the second connecting rod is detachable from the second groove.

In some embodiments, a first nut is disposed in the first groove. The second thread is disposed on the first nut. The second thread of the first nut is connected to the first thread of the first connecting rod. A second nut is disposed in the second groove. The fourth thread is disposed on the second nut. The fourth thread of the second nut is connected to the third thread of the second connecting rod. Both the first nut and the second nut are metal pieces. With both the first nut and the second nut being metal pieces, the structural strength at a junction between the cover body and the carrying handle is increased, and the probability of cracking the cover body of the top cover is further reduced.

In some embodiments, a first limiting bulge protrudes from a circumferential surface of a part of the first connecting rod, the part being located outside the first groove, and one end of the carrying handle is fitted between the first side plate and the first limiting bulge; and/or a second limiting bulge protrudes from a circumferential surface of a part of the second connecting rod, the part being located outside the second groove, and another end of the carrying handle is fitted between the second side plate and the second limiting bulge. The first limiting bulge and the second limiting bulge can prevent the two ends of the carrying handle from falling off from the first connecting rod and the second connecting rod.

In some embodiments, the first limiting bulge is disposed around the first connecting rod for one circle along the circumferential surface of the first connecting rod; and/or the second limiting bulge is disposed around the second connecting rod for one circle along the circumferential surface of the second connecting rod. The first limiting bulge and the second limiting bulge enable the two ends of the carrying handle to rotate in close fit with the first limiting bulge and the second limiting bulge respectively, thereby making the rotation of the carrying handle steadier.

In some embodiments, the first groove is close to a first end of the first side plate. The cover body further includes a third side plate. The third side plate is disposed at one end of the first side plate and connected to the first side plate, the second side plate, and the first cover plate separately. Two ends of the third side plate protrude out of the first side plate and the second side plate respectively. Protruding dimensions of the third side plate at the two ends are greater than or equal to a dimension by which the first connecting rod extends outside the first through-hole and a dimension by which the second connecting rod extends outside the second through-hole, respectively.

In some embodiments, the cover body further includes a fourth side plate, a second cover plate, and a side enclosure plate. The fourth side plate and the third side plate are opposite to each other and connected to the first side plate, the second side plate, and the first cover plate separately. The second cover plate includes a first surface and a second surface oriented back from each other. A through-hole running through the first surface and the second surface is created in the second cover plate. The first side plate, the third side plate, the second side plate, and the fourth side plate are all connected to an edge on one side of the through-hole and close an opening on the one side of the through-hole. The side enclosure plate wraps around the second surface for one circle. This makes the top cover visually appealing.

In some embodiments, the first connecting seat is disposed apart from the first cover plate, and the second connecting seat is disposed apart from the first cover plate. Disposing the components apart can provide a cushioning space for the carrying handle that is being lifted or pulled, thereby further reducing the probability of cracking the cover body of the top cover.

In some embodiments, a first cushion is sandwiched between the first connecting seat and the first cover plate; and/or a second cushion is sandwiched between the second connecting seat and the first cover plate. The first cushion and the second cushion can absorb the impact force caused by the lifting or pulling of the carrying handle, thereby further reducing the probability of cracking the cover body of the top cover.

In some embodiments, a shape of the first cushion on a side toward the first cover plate matches a shape of the first cover plate on a side toward the first cushion, and at least one third limiting bulge protrudes from the first cover plate toward the first connecting seat; and/or a shape of the second cushion on a side toward the first cover plate matches a shape of the first cover plate on a side toward the second cushion, and at least one fourth limiting bulge protrudes from the first cover plate toward the second connecting seat. The third limiting bulge and the fourth limiting bulge can limit positions of the first cushion and the second cushion respectively, so as to reduce the probability of the third limiting bulge and the fourth limiting bulge falling off from the top cover.

In some embodiments, the number of the third limiting bulges is plural, and the plurality of third limiting bulges are parallel to each other; and/or the number of the fourth limiting bulges is plural, and the plurality of fourth limiting bulges are parallel to each other. The third limiting bulge and the fourth limiting bulge can limit positions of the first cushion and the second cushion respectively, so as to reduce the probability of the third limiting bulge and the fourth limiting bulge falling off from the top cover.

In some embodiments, a transition between the first connecting seat and the first side plate is arcuate; and/or a transition between the second connecting seat and the second side plate is arcuate. In these embodiments, the arcuate transition between the first connecting seat and the first side plate can provide a cushion for the lifting and pulling of the carrying handle, thereby reducing the probability of cracks at a junction between the first connecting seat and the first side plate caused by stress concentration. The arcuate transition between the second connecting seat and the second side plate can provide a cushion for the lifting and pulling of the carrying handle, thereby reducing the probability of cracks at a junction between the second connecting seat and the second side plate caused by stress concentration.

According to a second aspect, this application provides a battery. The battery includes the top cover according to any one of the embodiments described above.

According to a third aspect, this application provides an electrical device. The electrical device includes the battery according to any one of the embodiments disclosed above.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a top cover (from a first viewing angle) according to some embodiments of this application;
FIG. 2 is a schematic structural diagram of a top cover (from a second viewing angle) according to some embodiments of this application;
FIG. 3 is a schematic structural diagram of a top cover (from a third viewing angle) according to some embodiments of this application;
FIG. 4 is a schematic close-up view of a region A of a top cover (from a third viewing angle) according to some embodiments of this application;
FIG. 5 is a schematic structural diagram of a top cover (from a fourth viewing angle) according to some embodiments of this application;
FIG. 6 is a schematic close-up view of a region B of a top cover (from a fourth viewing angle) according to some embodiments of this application;
FIG. 7 is a schematic structural diagram of a top cover (from a fifth viewing angle) according to some embodiments of this application;
FIG. 8 is a schematic cross-sectional view of a top cover (from a fifth viewing angle) sectioned along a C-D section line according to some embodiments of this application;
FIG. 9 is a schematic structural diagram of a top cover according to some embodiments of this application;
FIG. 10 is a schematic structural diagram of a battery according to some embodiments of this application; and
FIG. 11 is a schematic structural diagram of an electric device according to some embodiments of this application.

List of reference numerals:
10-top cover, 110-cover body, 111-first cover plate, 1111-third limiting bulge, 112-first side plate, 1121-first through-hole, 113-second side plate, 1131-second through-hole, 114-third side plate, 115-fourth side plate, 116-second cover plate, 117-side enclosure plate, 120-first connecting seat, 121-first groove, 122-first nut, 130-second connecting seat, 131- second groove; 140-first connecting rod, 150-second connecting rod, 151-second limiting bulge, 160-carrying handle, 170-first cushion;
100-battery, 20-box body;
1000-electrical device.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The inventor hereof has noticed that a battery includes a box body and a top cover. An accommodation pit is created in the box body. The top cover closes the opening of the accommodation pit of the box body and fits the accommodation pit of the box body to form an accommodation cavity for accommodating a battery cell. A carrying handle is disposed on the top cover. At least a part of the carrying handle is located on an inner surface side of the cover body of the top cover, and abuts on the inner surface of the cover body. In this way, the carrying handle applies a force to the inner surface of the cover body when being lifted or pulled, making the cover body prone to cracks caused by stress concentration, or even making way for water and other liquids to enter the accommodation cavity in which the battery cell is accommodated.

To alleviate the problem that the cover body of the top cover is prone to cracking, the applicant has found through research that the probability of cracking the cover body of the top cover can be reduced by disposing a connecting seat on the top cover, where the connecting seat is independent of the cover body and connected to the carrying handle.

In view of the above situation, in order to solve the problem that the cover body of the top cover is prone to cracking, the inventor has designed a top cover through in-depth research. On the inner side of the cover body of the top cover, a connecting seat connected to the carrying handle and independent of the cover body is disposed to reduce the force exerted by the carrying handle on the cover body, thereby reducing the probability of cracking the cover body of the top cover.

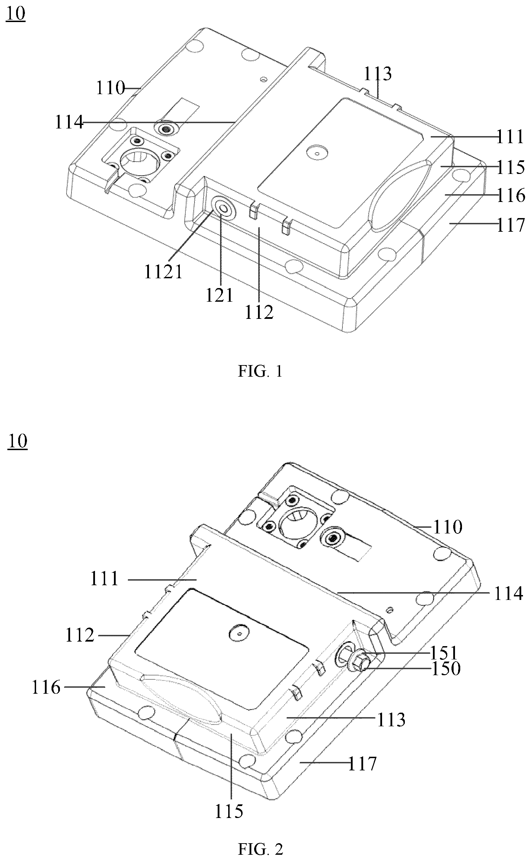

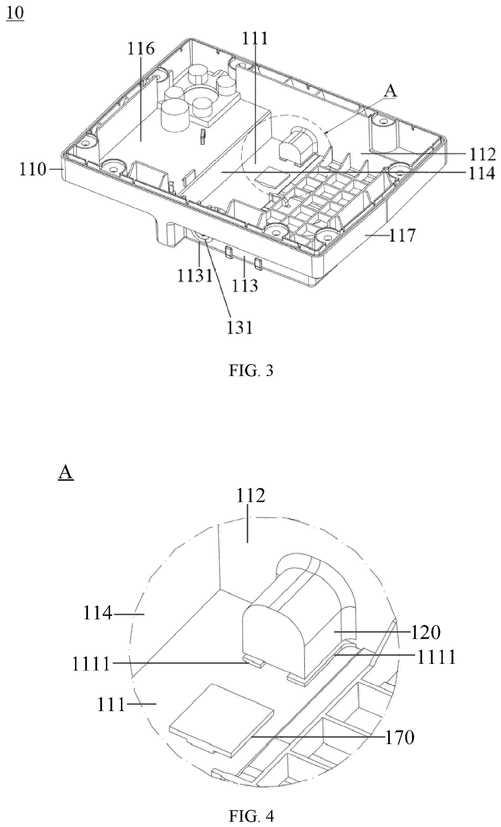

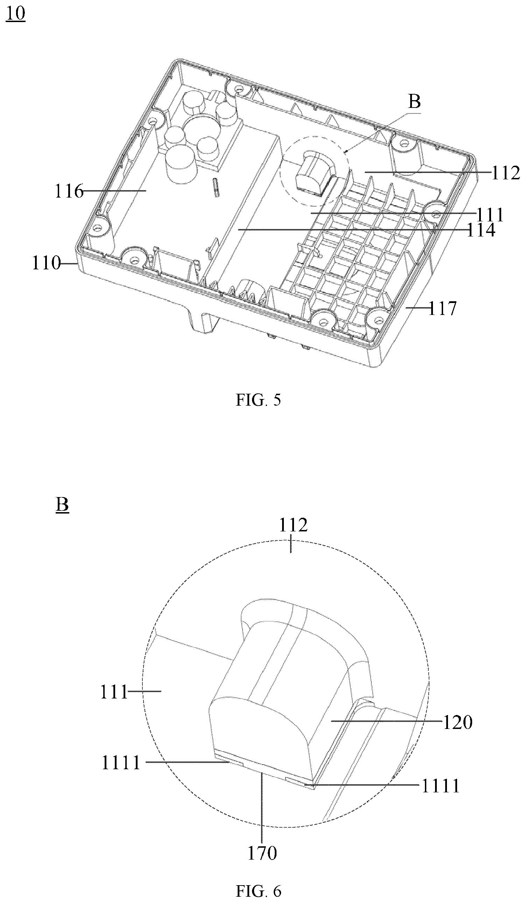

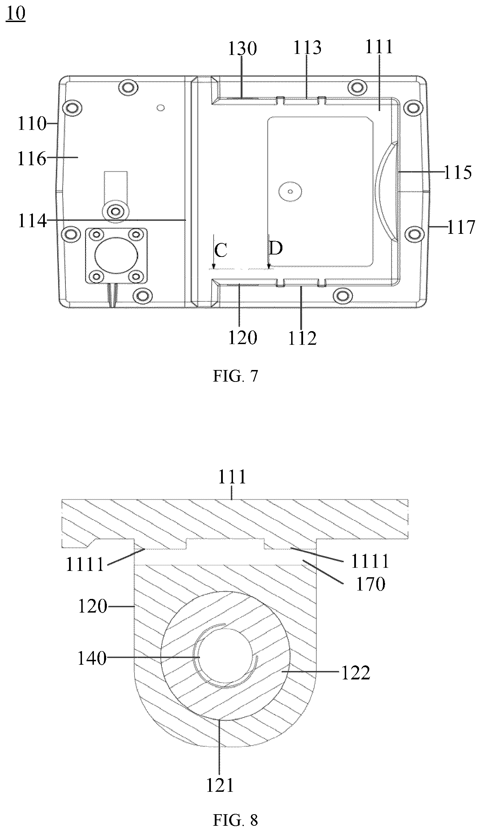

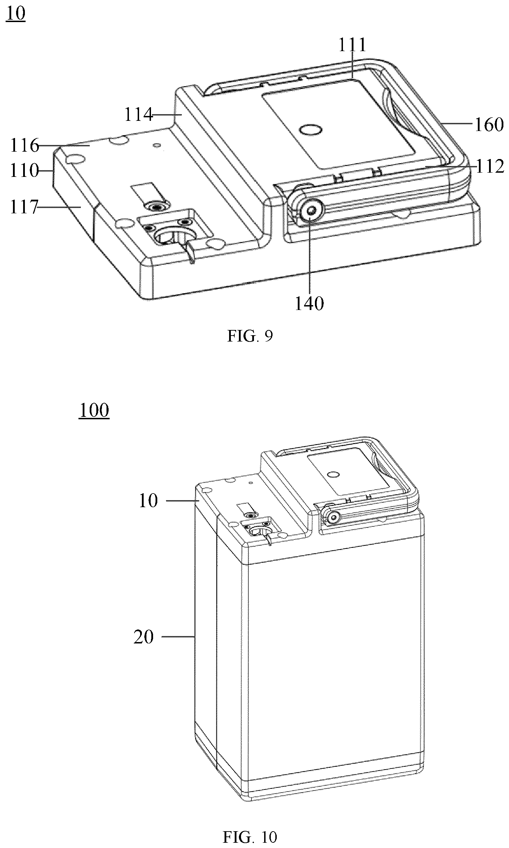

According to some embodiments of this application, referring to FIG. 1 in conjunction with FIG. 2 to FIG. 9, FIG. 1 is a schematic structural diagram of a top cover (from a first viewing angle) according to some embodiments of this application; FIG. 2 is a schematic structural diagram of a top cover (from a second viewing angle) according to some embodiments of this application; FIG. 3 is a schematic structural diagram of a top cover (from a third viewing angle) according to some embodiments of this application; FIG. 4 is a schematic close-up view of a region A of a top cover (from a third viewing angle) according to some embodiments of this application; FIG. 5 is a schematic structural diagram of a top cover (from a fourth viewing angle) according to some embodiments of this application; FIG. 6 is a schematic close-up view of a region B of a top cover (from a fourth viewing angle) according to some embodiments of this application; FIG. 7 is a schematic structural diagram of a top cover (from a fifth viewing angle) according to some embodiments of this application; FIG. 8 is a schematic cross-sectional view of a top cover (from a fifth viewing angle) sectioned along a C-D section line according to some embodiments of this application; and FIG. 9 is a schematic structural diagram of a top cover according to some embodiments of this application. This application provides a top cover 10. The top cover 10 includes a cover body 110, a first connecting seat 120, and a second connecting seat 130. The cover body 110 includes a first cover plate 111, a first side plate 112, and a second side plate 113. The first side plate 112 and the second side plate 113 are opposite to each other and connected to one side of the first cover plate 111. A first through-hole 1121 and a second through-hole 1131 opposite to each other are created on the first side plate 112 and the second side plate 113 respectively. The first connecting seat 120 is connected to a surface of the first side plate 112, the surface being oriented toward the second side plate 113. A first groove 121 communicating with the first through-hole 1121 is created on the first connecting seat 120. The second connecting seat 130 is connected to a surface of the second side plate 113, the surface being oriented toward the first side plate 112. A second groove 131 communicating with the second through-hole 1131 is created on the second connecting seat 130.

The cover body 110 includes a first cover plate 111, a first side plate 112, and a second side plate 113. The first side plate 112 and the second side plate 113 are opposite to each other and connected to one side of the first cover plate 111. In other words, the first side plate 112, the first cover plate 111, and the second side plate 113 are connected in sequence and form a U-shaped structure.

The first connecting seat 120 and the second connecting seat 130 are located on two opposite sides of the first side plate 112 respectively, and located on two opposite sides of the second side plate 113 respectively. The first connecting seat 120 and the second connecting seat 130 are opposite to each other. A first groove 121 communicating with the first through-hole 1121 is created on two sides of the first connecting seat 120 separately, and a second groove 131 communicating with the second through-hole 1131 is created on two sides of the second connecting seat 130 separately, the two sides being oriented back from each other.

During assembling of the carrying handle 160, two ends of the carrying handle 160 pass through the first through-hole 1121 and the second through-hole 1131 respectively, and are located in the first groove 121 and the second groove 131 respectively. The carrying handle 160 is rotatable relative to the first groove 121 and the second groove 131. Here, the carrying handle 160 may contain a first link lever, a second link lever, and a third link lever. The second link lever and the third link lever are vertically connected to two ends of the first link lever respectively. An end of the second link lever away from the first link lever and an end of the third link lever away from the first link lever are rotatably connected to the first groove 121 and the second groove 131 respectively.

In a specific embodiment, the battery includes a box body and a top cover 10. An accommodation pit is created in the box body. The top cover 10 closes the opening of the accommodation pit of the box body and fits the accommodation pit of the box body to form an accommodation cavity for accommodating a battery cell. The box body includes a side enclosure body and a bottom plate. The side enclosure body includes a first plate, a second plate, a third plate, and a fourth plate. The first plate, the second plate, the third plate, and the fourth plate are sequentially connected in tandem, and form a side enclosure body with openings at both ends. The bottom plate closes the opening at one end of the side enclosure body, and fits the side enclosure body to form the accommodation pit. The first plate and the third plate are opposite to each other. The second plate and the fourth plate are opposite to each other. The lengths of both the first plate and the third plate along a depth direction of the accommodation pit are greater than the lengths of the second plate and the fourth plate along the depth direction of the accommodation pit. A first strip groove and a second strip groove are created at two ends of the first plate on a side oriented toward the third plate. A third strip groove and a fourth strip groove are created at two ends of the third plate on a side oriented toward the first plate. The first strip groove, the second strip groove, the third strip groove, and the fourth strip groove all extend along the depth direction of the accommodation pit. Two ends of the first side plate 112 of the top cover 10 are inserted in the first strip groove and the third strip groove respectively. Two ends of the second side plate 113 are inserted in the second strip groove and the fourth strip groove respectively to enable the top cover 10 to close the opening of the accommodation pit. Here, the top cover 10 is fitted with a carrying handle 160.

In this embodiment, the two ends of the carrying handle 160 are located in the first groove 121 and the second groove 131 respectively. At the time of lifting and pulling the carrying handle 160, the carrying handle 160 acts directly on the first connecting seat 120 and the second connecting seat 130, thereby reducing the probability of cracking the cover body 110 of the top cover 10.

According to some embodiments of this application, referring to FIG. 1 to FIG. 9, the top cover 10 may further include: a first connecting rod 140, a second connecting rod 150, and a carrying handle 160. A part of the first connecting rod 140 passes through the first through-hole 1121 and is fixed in the first groove 121. A part of the second connecting rod 150 passes through the second through-hole 1131 and is fixed in the second groove 131. Two ends of the carrying handle 160 are fitted to the first connecting rod 140 outside the first through-hole 1121 and the second connecting rod 150 outside the second through-hole 1131 respectively. The two ends of the carrying handle 160 are rotatable relative to the first connecting rod 140 and the second connecting rod 150 respectively.

The first connecting rod 140 may be fixedly connected to the first groove 121 or may be detachably connected to the first groove 121. A radial dimension by which the first connecting rod 140 extends outside the first through-hole 1121 is less than or equal to a diameter of a hole of the carrying handle 160, the hole being available for the first connecting rod 140 to be socketed in. For example, a part of the first connecting rod 140, which is located outside the first through-hole 1121, is in a cylinder shape, and the radial dimension of the cylinder is equal to the diameter of the hole of the carrying handle 160, the hole being available for the first connecting rod 140 to be socketed in.

The second connecting rod 150 may be fixedly connected to the second groove 131 or may be detachably connected to the second groove 131. A radial dimension by which the second connecting rod 150 extends outside the second through-hole 1131 is less than or equal to a diameter of a hole of the carrying handle 160, the hole being available for the second connecting rod 150 to be socketed in. For example, a part of the second connecting rod 150, which is located outside the second through-hole, is in a cylinder shape, and the radial dimension of the cylinder is equal to the diameter of the hole of the carrying handle 160, the hole being available for the second connecting rod 150 to be socketed in.

In these embodiments, the two ends of the carrying handle 160 are fitted to the first connecting rod 140 and the second connecting rod 150 respectively. The first connecting rod 140 and the second connecting rod 150 are disposed penetratingly in the first side plate 112 and the second side plate 113 of the cover body 110 respectively. Therefore, when being lifted or pulled, the carrying handle 160 exerts a force away from the first cover plate 111 onto the first connecting seat 120 and the second connecting seat 130 respectively, thereby further reducing the probability of cracking the cover body 110 of the top cover 10.

According to some embodiments of this application, a first thread and a second thread matching each other are disposed on the first connecting rod 140 and in the first groove 121 respectively; and/or a third thread and a fourth thread matching each other are disposed on the second connecting rod 150 and in the second groove 131 respectively.

The first thread and the second thread matching each other are disposed on the first connecting rod 140 and in the first groove 121 respectively, indicating that both an outer contour of the part of the first connecting rod 140 connected to the first groove 121 and an inner contour of the first groove 121 are cylindrical. In addition, the helical first thread and the helical second thread are disposed on the outer surface of the part of the first connecting rod 140 connected to the first groove 121 and the inner wall of the first groove 121, respectively, thereby enabling a threaded connection between the first connecting rod 140 and the first groove 121.

The third thread and the fourth thread matching each other are disposed on the second connecting rod 150 and in the second groove 131 respectively, indicating that both an outer contour of the part of the second connecting rod 150 connected to the second groove 131 and an inner contour of the second groove 131 are cylindrical. In addition, the helical third thread and the helical fourth thread are disposed on the outer surface of the part of the second connecting rod 150 connected to the second groove 131 and the inner wall of the second groove 131, respectively, thereby enabling a threaded connection between the second connecting rod 150 and the second groove 131.

In these embodiments, the first thread of the first connecting rod 140 and the second thread of the first groove 121 enable a reliable fixed connection between the first connecting rod 140 and the first groove 121, and the first connecting rod 140 is detachable from the first groove 121. The third thread of the second connecting rod 150 and the fourth thread of the second groove 131 enable a reliable fixed connection between the second connecting rod 150 and the second groove 131, and the second connecting rod 150 is detachable from the second groove 131.

According to some embodiments of this application, referring to FIG. 8, a first nut 122 is disposed in the first groove 121. The second thread is disposed on the first nut 122. The second thread of the first nut 122 is connected to the first thread of the first connecting rod 140. A second nut is disposed in the second groove 131. The fourth thread is disposed on the second nut. The fourth thread of the second nut is connected to the third thread of the second connecting rod 150. Both the first nut 122 and the second nut are metal pieces.

The first nut 122 may be in interference fit with the first groove 121, or may be bonded to the first groove 121, or may be otherwise fixed to the first groove 121.

The second nut may be in interference fit with the second groove 131, or may be bonded to the second groove 131, or may be otherwise fixed to the second groove 131.

In these embodiments, with both the first nut 122 and the second nut being metal pieces, the structural strength at a junction between the cover body 110 and the carrying handle 160 is increased, and the probability of cracking the cover body 110 of the top cover 10 is further reduced.

According to some embodiments of this application, referring to FIG. 2, FIG. 8, and FIG. 9, a first limiting bulge protrudes from a circumferential surface of a part of the first connecting rod 140, the part being located outside the first groove 121, and one end of the carrying handle 160 is fitted between the first side plate 112 and the first limiting bulge; and/or a second limiting bulge 151 protrudes from a circumferential surface of a part of the second connecting rod 150, the part being located outside the second groove 131, and another end of the carrying handle 160 is fitted between the second side plate 113 and the second limiting bulge 151.

In these embodiments, the first limiting bulge and the second limiting bulge 151 can prevent the two ends of the carrying handle 160 from falling off from the first connecting rod 140 and the second connecting rod 150.

According to some embodiments of this application, referring to FIG. 2 and FIG. 9, the first limiting bulge is disposed around the first connecting rod 140 for one circle along the circumferential surface of the first connecting rod; and/or the second limiting bulge 151 is disposed around the second connecting rod 150 for one circle along the circumferential surface of the second connecting rod. For example, both the first connecting rod 140 and the second connecting rod 150 are screw rods each containing a nut. The part of the first connecting rod 140, which is fitted to the carrying handle 160, and the part of the second connecting rod 150, which is fitted to the carrying handle 160, may be smooth surfaces.

In these embodiments, the first limiting bulge and the second limiting bulge 151 enable the two ends of the carrying handle 160 to rotate in close fit with the first limiting bulge and the second limiting bulge 151 respectively, thereby making the rotation of the carrying handle 160 more steady.

According to some embodiments of this application, referring to FIG. 1 and FIG. 7, the first groove 121 is close to a first end of the first side plate 112. The cover body 110 may further include a third side plate 114. The third side plate 114 is disposed at one end of the first side plate 112 and connected to the first side plate 112, the second side plate 113, and the first cover plate 111 separately. Two ends of the third side plate 114 protrude out of the first side plate 112 and the second side plate 113 respectively. Protruding dimensions of the third side plate 114 are greater than or equal to a dimension by which the first connecting rod 140 extends outside the first through-hole 1121 and a dimension by which the second connecting rod 150 extends outside the second through-hole 1131.

Here, the two ends of the third side plate 114 protrude out of the first side plate 112 and the second side plate 113 respectively, and protruding dimensions of the third side plate 114 are greater than or equal to a dimension by which the first connecting rod 140 extends outside the first through-hole 1121 and a dimension by which the second connecting rod 150 extends outside the second through-hole 1131. Therefore, the two ends of the carrying handle 160 are opposite to the two protruding ends of the third side plate 114 respectively, thereby making the top cover 10 more visually appealing.

According to some embodiments of this application, referring to FIG. 1, FIG. 2, and FIG. 7, the cover body 110 may further include a fourth side plate 115, a second cover plate 116, and a side enclosure plate 117. The fourth side plate 115 and the third side plate 114 are opposite to each other and connected to the first side plate 112, the second side plate 113, and the first cover plate 111 separately. The second cover plate 116 includes a first surface and a second surface oriented back from each other. A through-hole running through the first surface and the second surface is created in the second cover plate 116. The first side plate 112, the third side plate 114, the second side plate 113, and the fourth side plate 115 are all connected to an edge on one side of the through-hole of the second cover plate 116 and close an opening on the one side of the through-hole. The side enclosure plate 117 wraps around the second surface for one circle.

The first cover plate 111, the first side plate 112, the second side plate 113, the third side plate 114, and the fourth side plate 115 are fitted together to form a first structural component containing a first recessed portion. The first structural component and the side enclosure plate 117 are disposed on the first surface and the second surface of the second cover plate 116 respectively. The first structural component closes the opening of the through-hole on the first surface of the second cover plate 116. The side enclosure plate 117 wraps around the second surface of the second cover plate 116 for one circle and fits the second surface of the second cover plate 116 to form a second recessed portion communicating with the first recessed portion.

In a specific embodiment, referring to FIG. 10, the battery 100 includes a box body 20 and a top cover 10. The box body 20 includes a side enclosure body and a bottom plate. The first plate, the second plate, the third plate, and the fourth plate are sequentially connected in tandem, and form a side enclosure body with openings at both ends. The bottom plate closes the opening at one end of the side enclosure body. The side enclosure plate 117 of the top cover 10 is fitted to the outside of the side enclosure body to allow the top cover 10 to close the opening at the other end of the side enclosure body.

This embodiment makes the top cover 10 visually appealing.

According to some embodiments of this application, referring to FIG. 6 and FIG. 8, the first connecting seat 120 is disposed apart from the first cover plate 111, and the second connecting seat 130 is disposed apart from the first cover plate 111.

In this embodiment, disposing the components apart can provide a cushioning space for the carrying handle 160 that is being lifted or pulled, thereby further reducing the probability of cracking the cover body 110 of the top cover 10.

According to some embodiments of this application, referring to FIG. 8, a first cushion 170 is sandwiched between the first connecting seat 120 and the first cover plate 111; and/or a second cushion is sandwiched between the second connecting seat 130 and the first cover plate 111.

The first cushion 170 may be a rubber cushion, or may be a silicone cushion, or may be another elastic cushion. The type of the first cushion is not particularly limited herein. The first cushion 170 may be connected in interference fit between the first connecting seat 120 and the first cover plate 111, or may be bonded between the first connecting seat 120 and the first cover plate 111, or may be otherwise connected, without being limited herein.

The second cushion may be a rubber cushion, or may be a silicone cushion, or may be another elastic cushion. The type of the second cushion is not particularly limited herein. The second cushion may be connected in interference fit between the second connecting seat 130 and the first cover plate 111, or may be bonded between the second connecting seat 130 and the first cover plate 111, or may be otherwise connected, without being limited herein.

In these embodiments, the first cushion 170 and the second cushion can absorb the impact force caused by the lifting or pulling of the carrying handle 160, thereby further reducing the probability of cracking the cover body 110 of the top cover 10.

According to some embodiments of this application, referring to FIG. 8, the shape of the first cushion 170 on a side toward the first cover plate 111 matches the shape of the first cover plate 111 on a side toward the first cushion 170, and at least one third limiting bulge 1111 protrudes from the first cover plate 111 toward the first connecting seat 120; and/or the shape of the second cushion on a side toward the first cover plate 111 matches the shape of the first cover plate 111 on a side toward the second cushion, and at least one fourth limiting bulge protrudes from the first cover plate 111 toward the second connecting seat 130.

In these embodiments, the third limiting bulge 1111 and the fourth limiting bulge can limit positions of the first cushion 170 and the second cushion respectively, so as to reduce the probability of the third limiting bulge 1111 and the fourth limiting bulge falling off from the top cover 10.

According to some embodiments of this application, the number of the third limiting bulges 1111 is plural, and the plurality of third limiting bulges 1111 are parallel to each other; and/or the number of the fourth limiting bulges is plural, and the plurality of fourth limiting bulges are parallel to each other. In these embodiments, the third limiting bulge 1111 and the fourth limiting bulge can limit positions of the first cushion 170 and the second cushion respectively, so as to reduce the probability of the third limiting bulge 1111 and the fourth limiting bulge falling off from the top cover 10.

For example, referring to FIG. 3, FIG. 4, FIG. 5, FIG. 6, and FIG. 8, the number of third limiting bulges 1111 and the number of fourth limiting bulges are 2. The two third limiting bulges 1111 are parallel to each other, and the two fourth limiting bulges are parallel to each other. The shape of the first cushion 170 on a side toward the first cover plate 111 matches the shape of the first cover plate 111 on a side toward the first cushion 170, and the shape of the second cushion on a side toward the first cover plate 111 matches the shape of the first cover plate 111 on a side toward the second cushion. Therefore, the cross-sections of both the first cushion 170 and the second cushion are inverted-T-shaped. In these embodiments, the third limiting bulges 1111 and the fourth limiting bulges are small in number, and can limit positions of the first cushion 170 and the second cushion respectively, thereby reducing the manufacturing cost of the top cover 10.

According to some embodiments of this application, referring to FIG. 4 to FIG. 6, a transition between the first connecting seat 120 and the first side plate 112 is arcuate; and/or a transition between the second connecting seat 130 and the second side plate 113 is arcuate.

The arcuate transitions may be arcuate transitions with a radius ranging from 1 to 3 millimeters, for example, a radius of 2 millimeters.

In these embodiments, the arcuate transition between the first connecting seat 120 and the first side plate 112 can provide a cushion for the lifting and pulling of the carrying handle 160, thereby reducing the probability of cracks at the junction between the first connecting seat 120 and the first side plate 112 caused by stress concentration. The arcuate transition between the second connecting seat 130 and the second side plate 113 can provide a cushion for the lifting and pulling of the carrying handle 160, thereby reducing the probability of cracks at the junction between the second connecting seat 130 and the second side plate 113 caused by stress concentration.

In an embodiment, the structures are symmetrical between the first side plate 112 and the second side plate 113, so as to make the top cover 10 more visually appealing.

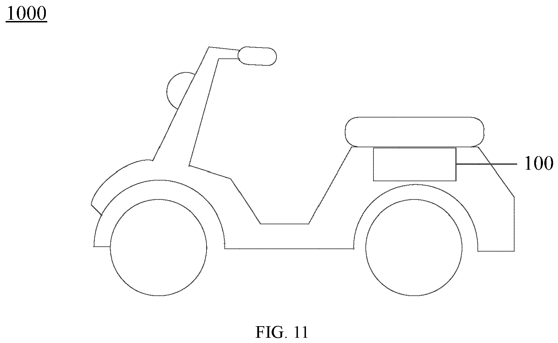

According to some embodiments of this application, this application further provides a battery 100. Referring to FIG. 11, the battery 100 includes the top cover 10 disclosed in any one of the foregoing embodiments.

The battery 100 is applicable to, but not limited to use in, electrical devices such as a vehicle, watercraft, or aircraft. The battery 100 disclosed herein or a power supply system containing the battery 100 may be put in use.

According to some embodiments of this application, this application further provides an electrical device 1000. Referring to FIG. 11, the electrical device 1000 includes the battery 100 disclosed in any one of the foregoing embodiments.

The electrical device 1000 may be, but is not limited to, an electric toy, an electric tool, an electric power cart, an electric vehicle, a ship, a spacecraft, or the like. The electric toy may include stationary or mobile electric toys, such as an electric car toy, an electric ship toy, an electric airplane toy, and the like. The spacecraft may include an airplane, a rocket, a space shuttle, a spaceship, and the like. For example, the electrical device 1000 is a two-wheeled electric vehicle or a three-wheeled electric vehicle.

For ease of description in the following embodiments, a two-wheeled electric vehicle is used as an example of the electrical device 1000 according to an embodiment of this application.

Referring to FIG. 11, the electrical device 1000 is a two-wheeled electric vehicle. The battery 100 is mounted under the seat of the two-wheeled electric vehicle. The battery 100 serves not only as an operating power supply of the electrical device 1000, but also as a driving power supply of the electrical device 1000.

In a specific embodiment, referring to FIG. 1 to FIG. 10, the battery 100 includes: a top cover 10 and a box body 20. An accommodation pit is created in the box body 20. The top cover 10 closes the opening of the accommodation pit and fits the accommodation pit to form an accommodation cavity.

The top cover 10 includes a cover body 110. The cover body 110 includes a first cover plate 111, a first side plate 112, a second side plate 113, a third side plate 114, a fourth side plate 115, a second cover plate 116, and a side enclosure plate 117. The first side plate 112, the second side plate 113, the third side plate 114, and the fourth side plate 115 are sequentially connected in tandem, and form a rectangular box. The first cover plate 111 closes the opening on one side of the rectangular box. A through-hole is created in the second cover plate 116. An edge of the through-hole of the second cover plate 116 is connected to the opening of the rectangular box on the other side of the rectangular box. The side enclosure plate 117 wraps around the second cover plate 116 for one circle on a side oriented back from the rectangular box. A first through-hole 1121 and a second through-hole 1131 opposite to each other are created on the first side plate 112 and the second side plate 113 respectively.

The top cover further includes a first connecting seat 120. The first connecting seat 120 is connected to a surface of the first side plate 112 and is at a third distance apart from the first cover plate 111, the surface being oriented toward the second side plate 113. A first groove 121 communicating with the first through-hole 1121 is created on the first connecting seat 120. A first nut 122 is disposed in the first groove 121. The first nut 122 is a metal piece, and a second thread is created in the first nut 122.

The top cover further includes a second connecting seat 130. The second connecting seat 130 is connected to a surface of the second side plate 113 and is at the third distance apart from the first cover plate 111, the surface being oriented toward the first side plate 112. A second groove 131 communicating with the second through-hole 1131 is created on the second connecting seat 130. A second nut is disposed in the second groove 131. The second nut is a metal piece, and a fourth thread is created in the second nut.

The top cover further includes a first connecting rod 140. The first connecting rod 140 is a screw rod containing a nut (that is, the first limiting bulge). The first connecting rod 140 is screwed to the first nut 122 in the first groove 121. An end of the first connecting rod 140, which contains a nut, is located outside the first groove 121.

The top cover further includes a second connecting rod 150. The second connecting rod 150 is a screw rod containing a nut (that is, the second limiting bulge 151). The second connecting rod 150 is screwed to the second nut in the second groove 131. An end of the second connecting rod 150, which contains a nut, is located outside the second groove 131.

The top cover further includes a carrying handle 160. The carrying handle 160 includes a first link lever, a second link lever, and a third link lever. The second link lever and the third link lever are vertically connected to two ends of the first link lever respectively. Afirst socket is created at an end of the second link lever away from the first link lever. A second socket is created at an end of the third link lever away from the first link lever. The two ends of the carrying handle 160 are fitted to the first connecting rod 140 and the second connecting rod 150 through the first socket and the second socket respectively. A part of the carrying handle 160, in which the first connecting rod 140 is socketed, is located between the first side plate 112 and the first limiting bulge. A part of the carrying handle 160, in which the second connecting rod 150 is socketed, is located between the second side plate 113 and the second limiting bulge 151.

A first cushion 170 is sandwiched between the first cover plate 111 and the first connecting seat 120. A surface of the first cover plate 111 is in contact with a surface of the first cushion 170, and the two contact surfaces fit each other. The cross-section of the first cushion 170 is in an inverted T-shape, as shown in FIG. 8. A second cushion is sandwiched between the first cover plate 111 and the second connecting seat 130. A surface of the first cover plate 111 is in contact with a surface of the second cushion, and the two contact surfaces fit each other. The cross-section of the second cushion is in an inverted T-shape, as shown in FIG. 8.

In this embodiment, the structures are symmetrical between the first side plate 112 and the second side plate 113.

The manufacturing process includes the following three steps: (i) manufacturing the cover body 110, the first nut 122 in the first groove 121, and the second nut in the second groove 131 as required, and then assembling the first cushion 170 and the second cushion, during which the first nut 122 and the second nut are connected to the cover body 110 by insert molding separately; (ii) passing the first connecting rod 140 and the second connecting rod 150 through the two ends of the carrying handle 160 respectively, and connecting the two connecting rods onto the first nut 122 and the second nut respectively; and (iii) assembling the top cover 10 finished in the second step onto a pre-made box body 20.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A top cover (10), **characterized in that** the top cover comprises:
a cover body (110), wherein: the cover body (110) comprises: a first cover plate (111), a first side plate (112), and a second side plate (113); the first side plate (112) and the second side plate (113) are opposite to each other and connected to one side of the first cover plate (111); and a first through-hole (1121) and a second through-hole (1131) opposite to each other are created on the first side plate (112) and the second side plate (113) respectively;
a first connecting seat (120), wherein: the first connecting seat (120) is connected to a surface of the first side plate (112), the surface being oriented toward the second side plate (113); and a first groove (121) communicating with the first through-hole (1121) is created on the first connecting seat (120); and
a second connecting seat (130), wherein: the second connecting seat (130) is connected to a surface of the second side plate (113), the surface being oriented toward the first side plate (112); and a second groove (131) communicating with the second through-hole (1131) is created on the second connecting seat (130).

2. The top cover (10) according to claim 1, further comprising:
a first connecting rod (140), wherein a part of the first connecting rod (140) passes through the first through-hole (1121) and is fixed in the first groove (121); and
a second connecting rod (150), wherein a part of the second connecting rod (150) passes through the second through-hole (1131) and is fixed in the second groove (131); and
a carrying handle (160), wherein:
two ends of the carrying handle (160) are fitted to the first connecting rod (140) outside the first through-hole (1121) and the second connecting rod (150) outside the second through-hole (1131) respectively; and
the two ends of the carrying handle (160) are rotatable relative to the first connecting rod (140) and the second connecting rod (150) respectively.

3. The top cover (10) according to claim 2, wherein:
a first thread and a second thread matching each other are disposed on the first connecting rod (140) and in the first groove (121) respectively; and/or
a third thread and a fourth thread matching each other are disposed on the second connecting rod (150) and in the second groove (131) respectively.

4. The top cover (10) according to claim 3, wherein:
a first nut (122) is disposed in the first groove (121), the second thread is disposed on the first nut (122), and the second thread of the first nut (122) is connected to the first thread of the first connecting rod (140);
a second nut is disposed in the second groove (131), the fourth thread is disposed on the second nut, and the fourth thread of the second nut is connected to the third thread of the second connecting rod (150); and
both the first nut (122) and the second nut are metal pieces.

5. The top cover (10) according to any one of claims 2 to 4, wherein:
a first limiting bulge protrudes from a circumferential surface of a part of the first connecting rod (140), the part being located outside the first groove (121); and one end of the carrying handle (160) is fitted between the first side plate (112) and the first limiting bulge; and/or
a second limiting bulge (151) protrudes from a circumferential surface of a part of the second connecting rod (150), the part being located outside the second groove (131); and another end of the carrying handle (160) is fitted between the second side plate (113) and the second limiting bulge (151).

6. The top cover (10) according to claim 5, wherein:
the first limiting bulge is disposed around the first connecting rod (140) for one circle along the circumferential surface of the first connecting rod; and/or
the second limiting bulge (151) is disposed around the second connecting rod (150) for one circle along the circumferential surface of the second connecting rod.

7. The top cover (10) according to any one of claims 2 to 6, wherein:
the first groove (121) is close to a first end of the first side plate (112); and
the cover body (110) further comprises a third side plate (114), wherein:
the third side plate (114) is disposed at one end of the first side plate (112) and connected to the first side plate (112), the second side plate (113), and the first cover plate (111) separately;
two ends of the third side plate (114) protrude out of the first side plate (112) and the second side plate (113) respectively; and
protruding dimensions of the third side plate (114) at the two ends are greater than or equal to a dimension by which the first connecting rod (140) extends outside the first through-hole (1121) and a dimension by which the second connecting rod (150) extends outside the second through-hole (1131), respectively.

8. The top cover (10) according to claim 7, wherein:
the cover body (110) further comprises a fourth side plate (115), a second cover plate (116), and a side enclosure plate (117);
the fourth side plate (115) and the third side plate (114) are opposite to each other and connected to the first side plate (112), the second side plate (113), and the first cover plate (111) separately;
the second cover plate (116) comprises a first surface and a second surface oriented back from each other;
a through-hole running through the first surface and the second surface is created in the second cover plate (116);
the first side plate (112), the third side plate (114), the second side plate (113), and the fourth side plate (115) are all connected to an edge on one side of the through-hole and close an opening on the one side of the through-hole; and
the side enclosure plate (117) wraps around the second surface for one circle.

9. The top cover (10) according to any one of claims 1 to 8, wherein:
the first connecting seat (120) is disposed apart from the first cover plate (111); and
the second connecting seat (130) is disposed apart from the first cover plate (111).

10. The top cover (10) according to claim 9, wherein:
a first cushion (170) is sandwiched between the first connecting seat (120) and the first cover plate (111); and/or
a second cushion is sandwiched between the second connecting seat (130) and the first cover plate (111).

11. The top cover (10) according to claim 10, wherein:
a shape of the first cushion (170) on a side toward the first cover plate (111) matches a shape of the first cover plate (111) on a side toward the first cushion (170), and at least one third limiting bulge (1111) protrudes from the first cover plate (111) toward the first connecting seat (120); and/or
a shape of the second cushion on a side toward the first cover plate (111) matches a shape of the first cover plate (111) on a side toward the second cushion, and at least one fourth limiting bulge protrudes from the first cover plate (111) toward the second connecting seat (130).

12. The top cover (10) according to claim 11, wherein:
a number of the third limiting bulges (1111) is plural, and the plurality of third limiting bulges (1111) are parallel to each other; and/or
a number of the fourth limiting bulges is plural, and the plurality of fourth limiting bulges are parallel to each other.

13. The top cover (10) according to any one of claims 1 to 8, wherein:
a transition between the first connecting seat (120) and the first side plate (112) is arcuate; and/or
a transition between the second connecting seat (130) and the second side plate (113) is arcuate.

14. A battery (100), comprising:
the top cover (10) according to any one of claims 1 to 13.

15. An electrical device (1000), comprising:
the battery (100) according to claim 14.
